# DEMANDE DE BREVET EUROPEEN

(11) **EP 0 742 661 A1**
(43) Date de publication de la demande: **13.11.1996**
(21) Numéro de dépôt: 96401018.5
(22) Date de dépôt: 10.05.1996
(51) Int. Cl.: H04L 25/06, G08B 26/00

(54) **Détection sélective de signaux de réveil, notamment pour systèmes d'alarme**

(30) Priorité: 11.05.1995 FR 9505587
(71) Demandeur: CONSTRUCTIONS ET ETUDES EN ELECTRONIQUE ET SYSTEMES (C2ES), F-71200 Le Creusot (FR)
(72) Inventeur: Jacob, Hervé, 71200 Saint Serrin du Bois (FR)
(74) Mandataire: Bruder, Michel

(57) **Abrégé**

L'invention concerne un procédé de transmission numérique de signaux constitués de trames de signaux binaires correspondants aux niveaux logiques "0" et "1", transmises en code biphase ou en code NRZ, par des ondes radioélectriques sur un canal hertzien unique, procédé permettant la détection sélective de deux types de signaux, *caractérisé en ce que* l'intervalle d'intertrames d'un premier type (A) de signaux est au niveau logique "0" et l'intervalle d'intertrames d'un second type (B) de signaux est au niveau logique "1". Elle concerne également un dispositif le mettant en oeuvre.

## Description

La présente invention concerne un procédé et un dispositif de transmission numérique au sein de systèmes de surveillance, d'alarme, de protection, de "domotique"... Dans de tels systèmes, les divers équipements sont reliés par des transmissions radioélectriques numériques sur un canal hertzien unique et fonctionnent de façon autonome sur une alimentation à pile. Chacun de ces équipements peut être muni d'un émetteur-récepteur, avec polarité inversée suivant le sens de circulation de l'information ou exclusivement d'émetteurs ou encore seulement de récepteurs suivant les besoins. De manière à augmenter l'autonomie de ces équipements, et ainsi la fiabilité du système, on cherche à diminuer la consommation des récepteurs.

A cet effet, on connaît déjà des récepteurs munis d'un séquenceur déterminant des fenêtres d'écoute périodiques, séparées par des périodes de veille pendant lesquelles le récepteur n'est pas alimenté. La consommation est alors réduite d'un facteur égal au rapport cyclique entre les fenêtres d'écoute et le cycle total écoute plus veille. Chaque émission commence alors par un préambule de durée au moins égale à la période de ces cycles, de manière à assurer la détection de signal par le récepteur au cours de l'une de ses fenêtres d'écoute ; une logique de pilotage maintient alors le récepteur à l'état actif pendant une durée de temps préalablement fixée et succédant à chaque détection de signal.

On peut encore diminuer la consommation de ces récepteurs dotés de cycles écoute/veille lorsque, dans le réseau de transmission numérique monocanal, les informations émises par un groupe d'émetteurs ne concernent qu'un groupe de récepteurs et éventuellement celles émises par un second groupe d'émetteurs ne concernent qu'un autre groupe de récepteurs. En effet, dans cette configuration les récepteurs classiques sont fréquemment mis à l'état actif pour la période de temps préalablement fixée, en réponse à des signaux qui ne les concernent pas. Il s'en suit une consommation inutile non négligeable.

La présente invention vise à supprimer cette consommation inutile, en procurant un procédé de transmission numérique de signaux constitués de trames de signaux binaires correspondants aux niveaux logiques "0" et "1", transmises en code biphase ou NRZ, par des ondes radioélectriques sur un canal hertzien unique, ledit procédé permettant la détection sélective de deux types de signaux et étant caractérisé en ce que l'intervalle d'intertrames d'un premier type de signaux est au niveau logique "0" et l'intervalle d'intertrames d'un second type de signaux est au niveau logique "1". Le code biphase est un mode de fonctionnement dans lequel l'information est transmise par la transition du signal d'un niveau à l'autre, alors que le code NRZ est un mode de fonctionnement dans lequel l'information est transmise par le maintien du signal à un des deux niveaux pendant un temps donné. La présente invention concerne également un dispositif mettant en oeuvre le procédé.

Le procédé de transmission numérique selon l'invention permet de ne provoquer le passage des récepteurs de l'état de veille à l'état actif que sur détection d'un signal qui leur est effectivement destiné. Cette sélectivité permet de supprimer la surconsommation entraînée pendant les périodes d'activation des émetteurs en limitant ces dernières à la réception des signaux destinés auxdits émetteurs.

On décrira ci-après, à titre d'exemple non limitatif, une forme d'exécution de la présente invention en référence au dessin annexé sur lequel :
- la figure 1 est une vue schématique d'un réseau de transmission numérique monocanal,
- la figure 2 représente les deux types de signaux numériques conformes à l'invention,
- la figure 3 représente un détecteur du premier type de signaux numériques de la figure 2 ,
- la figure 4 représente la réponse du détecteur de la figure 3 aux deux types de signaux numériques de la figure 2,
- la figure 5 représente un premier exemple de détecteur du second type de signaux numériques de la figure 2,
- la figure 6 représente la réponse du détecteur de la figure 5 aux deux types de signaux numériques de la figure 2,
- la figure 7 représente un second exemple de détecteur du second type de signaux de la figure 2,
- la figure 8 représente un détecteur sensible aux deux types de signaux numériques de la figure 2.

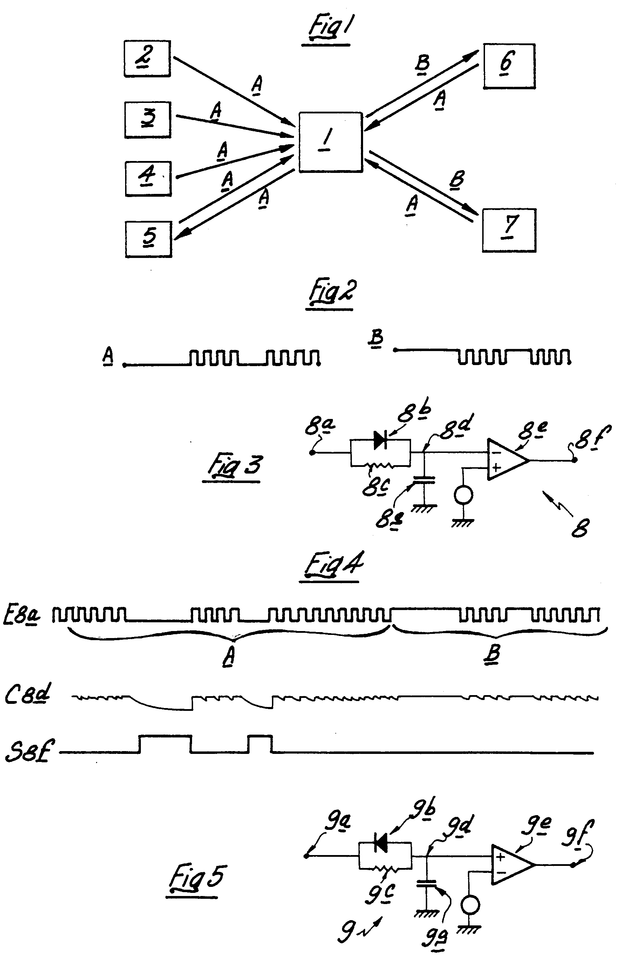

La figure 1 représente un système alarme-sécurité muni de télécommandes à usage "domotique". Dans un tel système, une centrale de surveillance 1, alimentée sur le secteur d'énergie réalise le contrôle de l'ensemble de l'installation, et en particulier de périphériques disposant d'une alimentation autonome. Il est bien clair qu'il ne s'agit que d'un exemple de réseau et que la présente invention est parfaitement applicable à tout autre système comportant des équipements reliés par des transmissions radioélectriques numériques sur un canal hertzien unique et alimentés de façon autonome. Des équipements périphériques sont associés à ladite centrale de surveillance 1 et fonctionnent avec des sources d'énergie indépendantes, par exemple des piles. Des périphériques d'alarme 2,3,4, tels que des détecteurs de mouvement à infra-rouge ou détecteurs d'ouverture de porte, sont munis uniquement d'émetteurs. Ces émetteurs émettent des signaux d'un premier type A, que l'on caractérisera ci-après, en direction de ladite centrale de surveillance 1, qui est un récepteur sélectif pour la détection et le traitement de tels signaux de type A.

Un autre périphérique 5 nécessite une liaison bidirectionnelle pour rendre fiable la transmission, parce qu'il est placé à grande distance de la centrale ou dans des zones à surveiller particulièrement ou encore parce qu'il doit émettre des alarmes particulières. Il peut s'agir par exemple d'une sonde de congélateur placée dans une cave, et devant transmettre son message d'alarme sans que celui-ci ne soit masqué par des détecteurs plus proches, comme par exemple les périphériques d'alarme 2,3,4, qui réagissent au passage des occupants du lieu surveillé lors du mode de fonctionnement de la centrale de surveillance 1 correspondant à leur présence. Le périphérique 5 bidirectionnel émettra un signal du premier type A et activera son récepteur pour recevoir un signal d'accusé-réception de même type en provenance de la centrale de surveillance 1. Il réitérera son émission en l'absence de cet accusé-réception. Son récepteur sera mis en veille dès que l'accusé-réception sera reçu.

D'autres périphériques 6,7 reçoivent des ordres de télécommande en provenance de la centrale de surveillance 1. Les récepteurs de ces périphériques 6,7 de télécommande doivent fonctionner en permanence, avec des cycles écoute/veille de fréquence assez rapide pour le temps de réponse souhaité. Il peut s'agir par exemple de périphériques de sécurité, telle une sirène commandée par la centrale de surveillance 1, ou encore de périphériques de télécommande à usage "domotique", tels que des commutateurs d'éclairage, de volets, de portails ou des électrovannes d'arrosage. Les récepteurs des périphériques 6,7 reçoivent alors un signal d'un second type B, à définir ci-après, en provenance de la centrale de surveillance 1, et lui renvoient un signal du premier type A confirmant la bonne exécution de l'ordre de télécommande. Dans le cas où la centrale de surveillance 1 ne reçoit pas cet accusé-réception, elle réitère son envoi de commande vers les récepteurs des périphériques 6,7. Au contraire, dans le cas où elle reçoit un accusé-réception avec indication de défaut, elle est avertie et peut transmettre une alarme sonore ou sur le réseau téléphonique commuté. Ces périphériques 6,7 de commande peuvent également fonctionner comme les périphériques d'alarme en envoyant à la centrale de surveillance 1 un signal du premier type A pour l'informer d'une tension de pile basse ou de tout autre dysfonctionnement interne. Avec une telle disposition, les périphériques 6,7 ne détectent pas les alarmes transmises par les autres périphériques, comme les émetteurs 2,3,4, ni les accusés réception de la centrale de surveillance 1 qui sont destinés à ces derniers puisque ces signaux sont du premier type A alors que les récepteurs desdits périphériques 6,7 ne sont sensibles qu'au signaux du second type B. Il s'en suit une substantielle économie d'énergie des piles des périphériques 6,7.

Les récepteurs utilisés dans le cadre de l'invention recoivent la modulation de fréquence suivant le principe de démodulation à convertion directe, mais d'autres types de modulation ou de récepteurs pourraient être envisagés. Ils sont caractérisés par la présence d'un détecteur de signal connecté sur leur sortie numérique, qui détecte l'intervalle d'intertrames entre deux envois successifs d'informations par paquets de bits. Les trames ainsi envoyées peuvent être identiques, pour augmenter la fiabilité de la transmission par redondance des émissions, ou différentes pour transmettre plusieurs informations. Elles sont constituées de signaux binaires "0" et "1", transmis en code biphase ou en code NRZ. La détection d'intervalle d'intertrames permet alors de détecter la présence du signal en entrée de récepteur, puisque en son absence, le bruit présent en entrée se retrouve en sortie sous forme de changements d'états aléatoires, espacés par des durées courtes, dont la moyenne statistique dépend de la bande passante du spectre reçu. La détermination de l'intertrame est également utilisée pour la synchronisation des bits dans l'algorithme de décodage.

Les signaux du premier type A se caractérisent par un intervalle d'intertrames au niveau logique "0" alors que les signaux du second type B se caractérisent par un intervalle d'intertrames au niveau logique "1", comme il est représenté sur la figure 2.

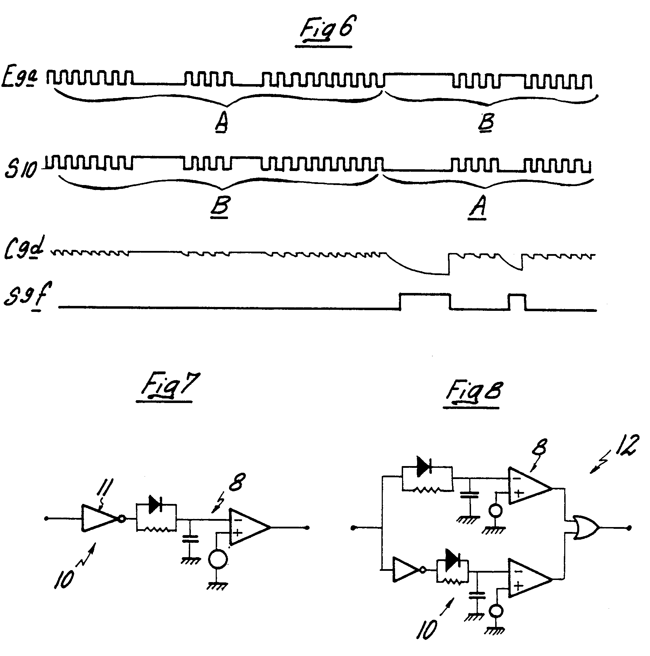

La centrale de surveillance 1 et le périphérique 5 comportent chacun un détecteur de signaux du premier type A. On pourra à cet effet utiliser un détecteur de crêtes comme par exemple le détecteur de crêtes 8 représenté sur la figure 3. L'entrée 8a dudit détecteur de crêtes 8 correspond à la borne d'entrée d'un dipôle constitué par une diode 8b montée dans le sens passant en parallèle avec une résistance 8c, la borne de sortie 8d dudit dipôle étant reliée à l'entrée inverseuse d'un amplificateur opérationnel 8e monté en comparateur dont la sortie 8f coïncide avec celle dudit détecteur de crêtes 8. D'autre part, un condensateur 8g est relié d'une part à la masse et d'autre part à la borne 8d et par conséquent à l'entrée inverseuse de l'amplificateur opérationnel 8e. Sur la figure 4 sont représentés successivement un signal E8a appliqué en entrée du détecteur de crêtes 8, le signal C8d résultant à la borne de sortie 8d du dipôle et le signal S8f résultant à la sortie du détecteur de crêtes 8. On constate que le détecteur de crêtes 8 détecte bien les intervalles d'intertrames au niveau logique "0" correspondant aux signaux du premier type A mais pas les intervalles intertrames au niveau logique "1" correspondant aux signaux du second type B. La présence d'un intervalle d'intertrames du premier type A de signal se traduit par l'absence de passage du signal E8a à l'état "1" pendant une durée au moins égale à la constante de temps du détecteur de crêtes 8. Cette absence de passage du signal E8a à l'état "1" permet au condensateur 8g de se décharger ce qui entraîne un saut de tension à la sortie de l'amplificateur opérationnel 8e monté en comparateur et donc à la sortie 8f du détecteur de crêtes 8, saut qui correspond à la détection d'un intervalle d'intertrames du premier type A. Au contraire, en présence d'un signal du second type B, le condensateur 8g n'a jamais la possibilité de se décharger complètement et le détecteur de crêtes 8 ne réagit pas aux intervalles d'intertrames.

On pourra utiliser comme détecteur de signaux du second type B un détecteur de crêtes inversé tel que le détecteur de crêtes inversé 9 représenté sur la figure 5. Il est de structure équivalente à celle du détecteur de crêtes 8 : l'entrée 9a dudit détecteur de crêtes inversé 9 correspond à la borne d'entrée d'un dipôle constitué par une diode 9b montée cette fois dans le sens non passant en parallèle avec une résistance 9c, la borne de sortie 9d dudit dipôle étant reliée à l'entrée non inverseuse d'un amplificateur opérationnel 9e monté en comparateur dont la sortie 9f coïncide avec celle dudit détecteur de crêtes inversé 9. D'autre part, un condensateur 9g est relié d'une part à la masse et d'autre part à la borne 9d et par conséquent à l'entrée non inverseuse de l'amplificateur opérationnel 9e. Sur la figure 6 sont représentés successivement un signal E9a appliqué en entrée du détecteur de crêtes inversé 9, le signal C9d résultant à la borne 9d et le signal S9f résultant à la sortie du détecteur de crêtes inverse 9. On constate que le détecteur de crêtes inversé 9 détecte bien les intervalles intertrames au niveau logique "1" correspondant au signaux du second type B mais pas les intervalles d'intertrames au niveau logique "0" correspondant aux signaux du premier type A.

Un autre exemple de détecteur 10 de signaux du second type B est représenté sur la figure 7. L'entrée de ce détecteur 10 est constituée par l'entrée d'un inverseur 11 à la sortie duquel est relié l'entrée d'un détecteur de crêtes 8 dont la sortie constitue la sortie dudit détecteur 10. Si l'on applique à l'entrée d'un tel détecteur 10, c'est à dire à l'entrée de l'inverseur 11 le signal E9a représenté sur la figure 6, on obtient à la sortie de l'inverseur 11 et donc à l'entrée du détecteur de crêtes 8 un signal S10 représenté également sur la figure 6 et par suite un signal en sortie de détecteur 10 équivalent au signal S9f.

Enfin, un troisième type de détecteur 12 sensible aux deux types de signaux A et B est représenté sur la figure 8 : il comprend un détecteur de signaux du premier type A, comme un détecteur de crêtes 8 et un détecteur de signaux du second type B, comme un détecteur 10, reliés entre eux par leur entrée pour former l'entrée dudit détecteur 12 et reliés respectivement à leur sortie à une des deux entrées d'une porte logique "OU" dont la sortie correspond à la sortie dudit détecteur 12. Selon une variante non représenté sur les figures, un tel détecteur 12 peut également comporter, comme détecteur de signaux du second type B, à la place du détecteur 10, un détecteur de crêtes inversé 9. Le détecteur 12, qui n'est pas utilisé dans le cadre de l'exemple représenté sur la figure 1, détectera par conséquent les signaux du premier type A comme les signaux du second type B. Un tel détecteur peut trouver son application dans des équipements de tests utilisés lors du contrôle de l'installation ou pour réaliser des relais qui ré-émettent en temps légèrement différé tout signal reçu pour augmenter la couverture géographique d'un tel réseau de transmission muni de récepteurs à détection sélective. Il est bien clair que l'invention n'est pas limitée au détecteur de crêtes 8 et au détecteur de crêtes inversé 9. Tout dispositif semblable utilisant des détecteurs de crêtes et/ou des détecteurs de crêtes inversés équivalents ne sortiraient pas du cadre de l'invention.

L'économie d'énergie des piles des périphériques 6,7 résultant de la sélectivité des détecteurs de signaux est évidente sur des exemples de consommations de courant réalistes. Un récepteur à modulation par déplacement de fréquence de type à conversion directe consomme 3 milliampères et est activé par fenêtres d'écoute de 50 microsecondes par seconde. Sa consommation moyenne est alors de 150 micro-ampères par seconde, soit 3,6 milliampères-heures par jour. En faisant l'hypothèse de 4 ordres de télécommande par jour, la logique de décodage est activée, depuis le début de détection , en moyenne 0,5 secondes après le début d'émission, jusqu'à un seconde après le dernier intervalle d'intertrames, ce qui provoque une consommation de 6 milliampères pendant 1,86 seconde en moyenne, soit 0,0031 milliampère-heure. Ces quatre émissions de télécommande n'augmentent donc la consommation journalière que de 0,012 milliampères-heure. Si le récepteur d'un des périphériques 6 ou 7 détectait toutes les émissions d'alarmes, par exemple celles des deux périphériques d'alarme 2 et 3, du type détecteurs de mouvement à infrarouge émettant chacun toutes les 3 minutes durant 10 heures par jour, soit 400 émissions par jour, la surconsommation résultante atteindrait 1,24 milliampère-heure par jour. Le bilan journalier de consommation moyenne passerait ainsi de 3,6 à 4,84 milliampère-heure, ce qui ferait passer de 1314 à 1777 milliampère-heure par an.

En acceptant des temps de réponse de 5 secondes, les fenêtres d'écoute de 50 microsecondes ont un rapport cyclique de 1 %, ce qui donne une consommation journalière moyenne d'un périphérique 6 ou 7 de 0,72 milliampère-heure. La détection sélective abaisse alors la consommation dudit périphérique 6 ou 7 de 715 à 262 milliampère-heure, soit une économie de 63,4 %.

## Revendications

1. Procédé de transmission numérique de signaux constitués de trames de signaux binaires correspondants aux niveaux logiques "0" et "1", transmises en code biphase ou en code NRZ, par des ondes radioélectriques sur un canal hertzien unique, procédé permettant la détection sélective de deux types de signaux, *caractérisé en ce que* l'intervalle d'intertrames d'un premier type (A) de signaux est au niveau logique "0" et l'intervalle d'intertrames d'un second type (B) de signaux est au niveau logique "1".

2. Dispositif de transmission numérique de signaux constitués de trames de signaux binaires correspondants aux niveaux logiques "0" et "1", transmises en code biphase ou en code NRZ, par des ondes radioélectriques sur un canal hertzien unique, dispositif permettant la détection sélective de deux types de signaux et mettant en oeuvre le procédé de la revendication précédente, *caractérisé en ce que* la détection de présence des signaux du premier type (A) est réalisée au moyen d'un détecteur d'intervalle d'intertrames au niveau logique "0" et *en ce que* la détection des signaux du second type (B) est réalisée au moyen d'un détecteur d'intervalle d'intertrames au niveau logique "1".

3. Dispositif de transmission numérique selon la revendication précédente, *caractérisé en ce qu*'il comporte au moins un détecteur d'intervalle d'intertrames au niveau logique "0" constitué d'un détecteur de crêtes (8) dont l'entrée (8a) correspond à la borne d'entrée d'un dipôle constitué par une diode (8b) montée dans le sens passant en parallèle avec une résistance (8c), la borne de sortie (8d) dudit dipôle étant reliée à l'entrée inverseuse d'un amplificateur opérationnel (8e) monté en comparateur, la sortie (8f) dudit amplificateur opérationnel (8e) constituant celle dudit détecteur de crêtes (8) et un condensateur (8g) étant relié d'une part à la masse et d'autre part à la borne de sortie (8d) dudit dipôle et par conséquent à l'entrée inverseuse de l'amplificateur opérationnel (8e).

4. Dispositif de transmission numérique selon l'une quelconque des revendications 2 ou 3, *caractérisé en ce qu*'il comporte au moins un détecteur d'intervalle d'intertrames au niveau logique "1" constitué d'un détecteur de crêtes inversé (9) dont l'entrée (9a) correspond à la borne d'entrée d'un dipôle constitué par une diode (9b) montée dans le sens non passant en parallèle avec une résistance (9c), la borne de sortie (9d) dudit dipôle étant reliée à l'entrée non inverseuse d'un amplificateur opérationnel (9e) monté en comparateur, la sortie (9f) dudit amplificateur opérationnel (9e) constituant celle dudit détecteur de crêtes inversé (9) et un condensateur (9g) étant relié d'une part à la masse et d'autre part à la borne de sortie (9d) dudit dipôle et donc à l'entrée non inverseuse de l'amplificateur opérationnel (9e).

5. Dispositif de transmission numérique selon l'une quelconque des revendications 2 à 4, *caractérisé en ce qu*'il comporte au moins un détecteur d'intervalle d'intertrames au niveau logique "1" constitué d'un détecteur (10) dont l'entrée est constituée par l'entrée d'un inverseur (11) à la sortie duquel est relié l'entrée d'un détecteur de crêtes (8) dont la sortie constitue la sortie dudit détecteur (10).

6. Dispositif de transmission numérique selon l'une quelconque des revendications 2 à 5, *caractérisé en ce qu*'il comporte au moins un détecteur (12) capable de détecter les intervalles d'intertrames au niveau logique "0" et les intervalles d'intertrames au niveau logique "1".

7. Dispositif de transmission numérique selon la revendication précédente, *caractérisé en ce que* le détecteur (12) comporte un détecteur de crêtes (8) et un détecteur de crêtes inversé (9) reliés entre eux par leur entrée pour former l'entrée dudit détecteur (12) et reliés respectivement par leur sortie à une des deux entrées d'une porte logique "OU" dont la sortie correspond à la sortie dudit détecteur (12).

8. Dispositif de transmission numérique selon la revendication 6, *caractérisé en ce que* le détecteur (12) comporte un premier détecteur de crêtes (8) et un dipôle constitué d'un inverseur monté en série avec un second détecteur de crêtes (8), ledit premier détecteur de crêtes (8) et ledit dipôle étant reliés entre eux par leur entrée pour former l'entrée dudit détecteur (12) et étant reliés respectivement par leur sortie à une des deux entrées d'une porte logique "OU" dont la sortie correspond à la sortie du détecteur (12).

9. Application du dispositif selon l'une quelconque des revendications 2 à 8 à un système d'alarme.
